# EUROPEAN PATENT APPLICATION

(11) **EP 4 276 303 A1**
(43) Date of publication of application: **15.11.2023**
(21) Application number: 22172929.6
(22) Date of filing: 12.05.2022
(51) Int. Cl.: F03D 7/02, F03D 7/04

(54) **A METHOD FOR CONTROLLING NOISE GENERATED BY A WIND FARM**

(71) Applicant: VESTAS WIND SYSTEMS A/S, 8200 Aarhus N (DK)
(72) Inventor: MACHEFAUX, Ewan, 4030 Tune (DK); SLOTH, Erik, 8410 Rønde (DK); ZAGAR, Mark, 8471 Sabroe (DK)
(74) Representative: Vestas Patents Department

(57) **Abstract**

A method for controlling noise generated by a wind farm (1) with a plurality of wind turbines (2) is disclosed. A noise propagation model (7) related to noise propagation across the wind farm (1) and in the vicinity of the wind farm (1), under various operating conditions, is provided. For each wind turbine (2), a wind turbine model (8) is provided. A noise level at a predefined evaluation position is predicted, based on the noise propagation model (7), the wind turbine models (8) and information regarding the current operating conditions. In the case that the predicted noise level exceeds a predefined threshold noise value, one or more wind turbines (2) are selected using the noise propagation model (7) and the wind turbine models (8), and by performing an optimisation process with the predefined threshold noise value at the predefined evaluation position as a constraint, the noise generation and the power production of the wind turbines (2) as optimisation variables, and the total power production of the wind farm (1) as an optimisation target, thereby reducing the predicted noise level at the predefined evaluation position to a level below the predefined threshold noise value while maximising the total power production of the wind farm (1).

## Description

### FIELD OF THE INVENTION

The present invention relates to a method for controlling noise generated by a wind farm, the wind farm comprising a plurality of wind turbines. The method according to the invention ensures that noise generated by the wind farm remains within specified boundaries without unduly reducing the power production of the wind farm.

### BACKGROUND OF THE INVENTION

During operation, a wind turbine generates noise. The noise generated depends on how the wind turbine is operated, including rotational speed of the rotor of the wind turbine, the level of the power generated by the wind turbine, etc.

The propagation of the noise generated by a wind turbine depends on ambient conditions. The ambient conditions include permanent conditions, such as terrain, vegetation, roughness, obstacles, etc. Furthermore, the ambient conditions include variable conditions, such as wind speed, wind direction, turbulence level, precipitation, air density, etc.

Accordingly, a noise level perceived at a specified position at a distance from a wind turbine generating the noise depends on how the wind turbine is operated as well as on the prevailing ambient conditions. In the case that the wind turbine is arranged in a wind farm comprising a plurality of wind turbines, a noise level perceived at the specified position will comprise noise contributions from several of the wind turbines of the wind farm, possibly from all of the wind turbines of the wind farm.

It is not uncommon that noise limits or noise constraints are defined for certain areas. This could, e.g., be in order to ensure that people living or working within the area are protected from undue noise levels. Alternatively or additionally, noise limits or noise constraints may be defined in order to protect wildlife. Since wind turbines generate noise during operation, as described above, a wind farm will normally be under the obligation to keep the noise generated by the wind turbines below a level which ensures that the perceived noise in neighbouring areas remains within the specified noise limits. If the wind conditions are such that full power production from all of the wind turbines of the wind farm results in the noise limit in one or more neighbouring areas being exceeded, it may be necessary to lower the power production of one or more wind turbines and/or to stop operation of one or more wind turbines, in order to decrease the generated noise to a level which ensures that the noise requirements are fulfilled. Thereby the total power production of the wind farm is decreased.

When the situation described above occurs, the one or more wind turbines to decrease power production or stop operation must be identified. For instance, one or more of the wind turbines being closest to the affected neighbouring areas may be selected, since the perceived noise decreases as 1/r² with the distance from the source of the noise, and it may therefore be expected that decreasing the noise generated by the wind turbines closest to the affected neighbouring area will have the highest impact on the perceived noise within the neighbouring area. However, this approach may have an unduly high impact on the total power production of the wind farm.

### DESCRIPTION OF THE INVENTION

It is an object of embodiments of the invention to provide a method for controlling a wind farm in which noise generated by the wind farm is managed with minimal impact on the total power production of the wind farm.

The invention provides a method for controlling noise generated by a wind farm, the wind farm comprising a plurality of wind turbines arranged at a wind farm site, the method comprising the steps of:
- providing a noise propagation model related to noise propagation across the wind farm and in the vicinity of the wind farm, under various operating conditions, the noise propagation model including the wind turbines of the wind farm as noise generators, and the noise propagation model taking interactions among the wind turbines into account,
- for each wind turbine of the wind farm, providing a wind turbine model, the wind turbine model relating to at least power production and noise generation of the wind turbine under various operating conditions,
- predicting a noise level at a predefined evaluation position, based on the noise propagation model, the wind turbine models and information regarding the current operating conditions,
- in the case that the predicted noise level exceeds a predefined threshold noise value, selecting one or more wind turbines among the wind turbines of the wind farm, and changing operation of the one or more selected wind turbines,
wherein the steps of selecting one or more wind turbines and changing operation of the one or more selected wind turbines are performed using the noise propagation model and the wind turbine models, and by performing an optimisation process with the predefined threshold noise value at the predefined evaluation position as a constraint, the noise generation and the power production of the wind turbines as optimisation variables, and the total power production of the wind farm as an optimisation target, thereby reducing the predicted noise level at the predefined evaluation position to a level below the predefined threshold noise value while maximising the total power production of the wind farm.

Thus, the invention provides a method for controlling noise generated by a wind farm. In the present context the term 'wind farm' should be interpreted to mean a group of at least two wind turbines sharing infrastructure, such as infrastructure for power transmission to a power grid. Thus, the wind farm comprises a plurality of wind turbines being arranged at a geographical site, i.e. a wind farm site.

According to the method of the invention, a noise propagation model is initially provided. The noise propagation model is related to noise propagation across the wind farm and in the vicinity of the wind farm, under various operating conditions. Accordingly, the noise propagation model reflects how noise propagates across the site of the wind farm, and out of the wind farm to adjacent areas, when various operating conditions are prevailing. The operating condition may, e.g., include wind and weather conditions, such as wind direction, wind speed, turbulence conditions, precipitation, air density, etc. One example of a standard noise model applied in the industry is the NORD2000 noise model.

The noise propagation model further includes the wind turbines of the wind farm as noise generators, and the noise propagation model takes interactions among the wind turbines into account. Accordingly, the noise propagation model reflects how the noise, which is generated by the individual wind turbines of the wind farm, in the manner described above, propagates across the site of the wind farm, and out of the wind farm to adjacent areas, while taking into account how the wind turbines, and thereby the noise generators, interact with each other. For instance, any interference between the noise generated by the various wind turbines may be taken into account. Furthermore, it may be taken into account how operation of one wind turbine affects operation of one or more other wind turbines, and thereby the noise generated by these wind turbines. For instance, operation of one wind turbine may affect the local operating conditions at the position of one of more of the other wind turbines, thereby changing how these wind turbines perform.

Furthermore, for each wind turbine of the wind farm, a wind turbine model is provided. The wind turbine model relates to at least the power production and noise generation of the wind turbine under various operating conditions. Accordingly, for a given wind turbine, the wind turbine model reflects how the wind turbine performs, at least with regard to power production and noise generation, when that wind turbine is subjected to specified various operating conditions. Thus, the wind turbine models reflect the behaviour of the noise generators of the noise propagation model, under various operating conditions, and also reflect the corresponding power production of the wind turbines. In particular, the wind turbine models give the relationship between the power production and the noise generation of the wind turbines under various operating conditions.

Next, a noise level at a predefined evaluation position is predicted, based on the noise propagation model, the wind turbine models and information regarding the current operating conditions. The predefined evaluation position may, e.g., be a position within the wind farm, or a position outside the wind farm, but in the vicinity thereof. For instance, the predefined evaluation position may be a position where noise constraints exist, e.g. a position of a house, a village, a sensitive wildlife area, etc.

As described above, the wind turbine models reflect the noise being generated by the wind turbines under specified operating conditions, and the wind turbines are considered noise generators in the noise propagation model. Therefore, by applying the wind turbine models in the noise propagation model, and applying information regarding the current operating conditions, the noise propagation model will include noise generators in the form of the expected noise generated by the wind turbines, under the current operating conditions, and as specified by the respective wind turbine models. Furthermore, the noise propagation model specifies how the noise generated by the wind turbines propagates across the wind farm and in the vicinity of the wind farm, under the current operating conditions. Thereby it can be predicted, based on the noise propagation model, which impact the generated noise has at the predefined evaluation position, i.e. the expected noise level at that position can be predicted.

In the case that the predicted noise level exceeds a predefined threshold noise value, it will be necessary to reduce the total noise generated by the wind farm, in order to bring the noise level at the predefined evaluation position to a level below the predefined threshold noise value, e.g. in order to ensure compliance with noise restrictions at the predefined evaluation position.

As described above, the noise generated by a wind turbine depends, inter alia, on how the wind turbine is operated. Therefore, in order to reduce the total noise generated by the wind farm, one or more wind turbines are selected among the wind turbines of wind farm, and the operation of the one or more selected wind turbines is changed. Thereby the noise generated by the one or more selected wind turbines is reduced, thereby reducing the total noise generation of the wind farm, and accordingly reducing the noise level at the predefined evaluation position.

The one or more wind turbines are selected, and their operation changed, by using the noise propagation model and the wind turbine models. Furthermore, this is done by performing an optimisation process with the predefined threshold noise value at the predefined evaluation position as a constraint, the noise generation and the power production of the wind turbines as optimisation variables, and the total power production of the wind farm as an optimisation target.

Accordingly, the optimisation process is performed in such a manner that it is ensured that the noise level at the predefined evaluation position remains below the predefined threshold noise value, and in such a manner that the total power production of the wind farm is maximised, i.e. the total power production of the wind farm is as high as possible, under the current operating conditions and given the noise constraints at the predefined evaluation position. In order to obtain this, the operation of the wind turbines is allowed to vary, within the noise propagation model including the wind turbine models, in a manner which varies the noise generated by the wind turbines as well as the power production of the wind turbines. Since the noise propagation model takes interactions among the wind turbines into account, the optimisation process also takes into account how variations in operation of one wind turbine affects the operation of the other wind turbines, including the power production and the noise generation of the other wind turbines.

Thus, the optimisation process, performed by means of the noise propagation model and the wind turbine models, ensures that the selection of the one or more wind turbines, as well as the manner in which the operation of the selected wind turbines is changed, is performed in a manner which provides the required reduction in the noise level at the predefined evaluation position with a minimum reduction in the possible total power production of the wind farm, i.e. while maximising the total power production of the wind farm, under the given circumstances.

Finally, the selected wind turbines are controlled in accordance with the respective selected changes in operation. This may, e.g., include changing one or more control settings of the selected wind turbines. Thereby the desired reduction in noise level at the predefined evaluation position is actually obtained.

Accordingly, the method according to the invention allows any noise requirements to be fulfilled without unduly reducing the total power production of the wind farm.

The method may further comprise the step of providing a site specific wind flow field across the wind farm site, based on the current operating conditions, and the steps of predicting a noise level, selecting one or more wind turbines and changing operation of the one or more selected wind turbines may further be performed based on the site specific wind flow field.

According to this embodiment, a site specific wind flow field across the wind farm site is obtained and applied to the noise propagating model, and possibly to the wind turbine models, in order to predict the noise level at the predefined evaluation position, as well as in order to select one or more wind turbines and change the operation thereof.

The site specific wind flow field reflects how the wind flows across the wind farm site under the operating conditions which are currently prevailing. Furthermore, the site specific wind flow field reflects conditions which are specific to the wind farm site, and which affect how the wind flows. Such conditions may, e.g., include terrain variations, vegetation, buildings or other obstacles, the wind turbines, etc. Furthermore, the site specific wind flow field may take dynamic site specific conditions into account, which are relevant with regard to the wind flow across the wind farm site, e.g. in the form of known or expected turbulence conditions, dominating wind directions, seasonal variations, etc.

Since noise is carried by the wind, the wind flow field across the wind farm site is relevant with regard to how noise propagates across the wind farm. Therefore, applying the site specific wind flow field to the noise propagation model, and possibly to the wind turbine models, as described above, provides a more accurate prediction of the noise level at the predefined evaluation position, and provides a more accurate basis for selecting the one or more wind turbines, as well as how to change their operation in order to reduce the noise generated by the wind farm.

The site specific wind flow field may be based at least partly on a high resolution weather model. The high resolution weather model may, e.g., be generated by means of accurate flow models of the wind farm site, such as Computational Fluid Dynamics (CFD) models or coupled weather models, and/or based on previously measured weather data at the wind farm site.

According to this embodiment, detailed information regarding the weather conditions across the wind farm is taken into account in the site specific wind flow field. Thereby it is ensured that the wind flow field, which is subsequently applied to the noise propagation model, takes detailed local weather conditions into account. This improves the accuracy of the site specific wind flow field.

The site specific wind flow field may be based at least partly on expected turbulence patterns at the wind farm site.

According to this embodiment, expected turbulence conditions across the wind farm site are taken into account in the site specific wind flow field. The expected turbulence patterns may, e.g., be generated based on known obstacles within the wind farm site, such as buildings, vegetations, hills and valleys, the wind turbines, etc. Such obstacles may give rise the turbulence. Furthermore, known atmospheric conditions at the wind farm site may be taken into account. The turbulence patterns may, e.g., specify turbulence intensity and/or turbulence eddy on temporal and/or spatial scales.

The turbulence conditions at the wind farm site are relevant with regard to how the wind flows across the wind farm site. Accordingly, taking expected turbulence patterns into account provides a more accurate wind flow field, and thereby a more accurate prediction of the noise level at the predetermined evaluation position.

The step of providing a site specific wind flow field may be based at least partly on a wind flow model related to the wind farm site, and the noise propagation model may be at least partly based on the wind flow model.

According to this embodiment, a wind flow model related to the wind farm site, e.g. of the kind described above, is taken into account when generating the site specific wind flow field, as well as when generating the noise propagating model.

The step of providing a noise propagation model and/or the step of providing wind turbine models may comprise training an artificial intelligence (AI) model.

According to this embodiment, the noise propagation model and/or the wind turbine models are generated at least partly by means of artificial intelligence (AI) or machine learning. An AI model is normally trained by supplying a large amount of data to the model, and allowing the model to identify patterns in the data. In particular, the AI models may learn how the wind turbines behave under various operating conditions, and how they affect each other due to their operation. They may further learn how noise actually propagate across the wind farm under various operating conditions.

Thus, according to this embodiment, the noise propagation model and/or the wind turbine models are based on patterns in data which have been identified by means of AI. Thereby the optimisation process performed when the one or more wind turbines are selected, and when selecting how to change operation of the one or more selected wind turbines, in order to obtain a desired reduction in noise level at the predefined evaluation position, is also performed based on AI trained models. This is an advantage because thereby it is more likely that a true optimal solution is selected, i.e. the solution which ensures that the noise level at the predefined evaluation position remains below the predefined threshold noise value, with the lowest possible reduction in the total power production of the wind farm, under the given circumstances.

Furthermore, this will allow the models to rapidly simulate the spatial variation of noise levels in various operating settings of the wind turbines, thereby allowing appropriate selection of wind turbines and change in operation of the selected wind turbines to be performed essentially in real time.

The AI model may be trained offline. In this case a training dataset is supplied to the AI model in order to train the AI model before it is put into use. Alternatively or additionally, the AI model may be trained online. In this case the AI model is trained, or retrained, during use, and by means of data which is supplied to the AI model while it is being used. This will allow the AI model to be continuously improved, based on real-life data.

The step of training the artificial intelligence (AI) model may comprise applying reinforced learning.

In the present context the term 'reinforced learning' should be interpreted to mean training of AI models or machine learning models to make a sequence of decisions. The model learns to achieve a goal in an uncertain, potentially complex environment. Accordingly, reinforced learning is very suitable for handling the optimisation process applied in the method according to the invention, where a change in operation of one wind turbine affects the operation of other wind turbines, and everything depends on the currently prevailing operating conditions, including wind and weather conditions being subject to variations.

The step of changing operation of the one or more selected wind turbines may comprise selecting one or more control parameter settings and adjusting the selected control parameter settings in a selected manner. The control parameter settings may, e.g., include power production setpoint, pitch angle, yaw angle, curtailment level, etc.

The noise propagation model may further relate to frequency components of the generated noise.

The propagation of sound depends on the frequency of the sound. For instance, sound at low frequencies tend to propagate further than sound at higher frequencies. Furthermore, some frequencies are more critical to human beings or certain kinds of wildlife than other frequencies. It is therefore relevant to include frequency components of the generated noise in the noise propagation model.

The method may further comprise the step of updating the noise propagation model and/or the wind turbine models during operation of the wind farm. This could, e.g., include retraining of AI models as described above.

According to this embodiment, the noise propagation model and/or the wind turbine models are continuously improved during operation of the wind farm, and based on actual data obtained during operation of the wind farm.

The noise propagation model may be at least partly based on the wind turbine models.

According to this embodiment, the noise signatures of the individual wind turbines are included in the noise propagation model, in the form of appropriate noise generators, at the positions of the wind turbines, and as specified by the wind turbine models.

### BRIEF DESCRIPTION OF THE DRAWINGS

The invention will now be described in further detail with reference to the accompanying drawings in which
Fig. 1 illustrates a wind farm in which a method according to an embodiment of the invention may be performed,
Fig. 2 is a diagram illustrating a method according to an embodiment of the invention, and
Fig. 3 is a flow chart illustrating a method according to an embodiment of the invention.

### DETAILED DESCRIPTION OF THE DRAWINGS

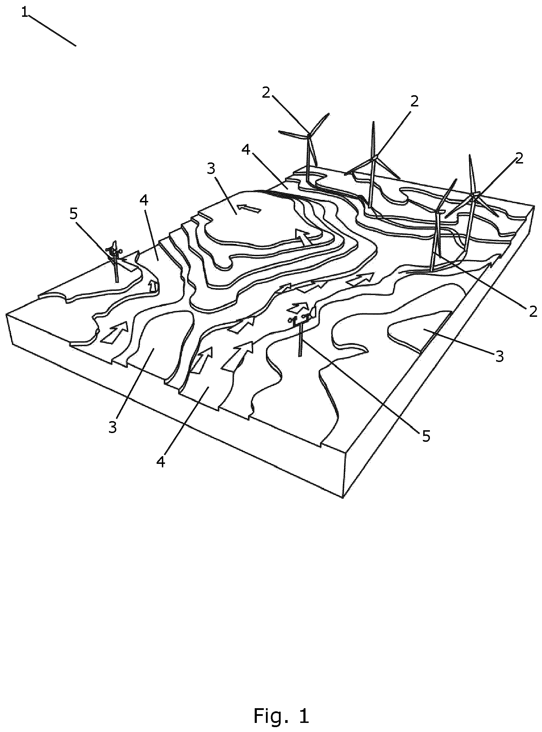

Fig. 1 illustrates a wind farm 1 comprising a plurality of wind turbines 2, four of which are shown. The site of the wind farm 1 defines elevation variations in the form of hills 3 and valleys 4, which affect the wind flow through the wind farm 1. Two metmasts 5 are arranged within the wind farm 1 for measuring weather conditions, including wind conditions, such as wind speed and wind direction.

Noise generated by the wind farm 1 may be controlled in the following manner. A noise propagation model related to noise propagation across the wind farm 1 and in the vicinity of the wind farm 1, under various operating conditions, is provided. The wind turbines 2 form noise generators of the noise propagation model, and the wind flow across the wind farm 1, under the various operating conditions, is taken into account when providing the noise propagation model. Thereby the noise propagation model may be used for predicting how noise generated by the wind turbines 2 propagates across and immediately outside the wind farm 1, under the various operating conditions.

Furthermore, for each wind turbine 2 of the wind farm 1, a wind turbine model is provided. The wind turbine models relate to at least power production and noise generation of the respective wind turbines 2 under various operating conditions. There is a link between power production and noise generation of a wind turbine 2. For instance, lowering the power production of a wind turbine 2 will normally result in a reduction in noise generated by the wind turbine 2. Accordingly, the noise generated by a wind turbine 2 may be reduced by appropriately reducing the power production of the wind turbine 2. The wind turbine models reflect this relationship, and the penalty, in terms of lost power production, for a given noise reduction can therefore be derived from the wind turbine models.

The wind turbine models are applied into the noise propagation model, in the sense that they represent noise profiles of the wind turbines 2, and thereby the noise generators, of the noise propagation model. Furthermore, the noise propagation model takes interactions among the wind turbines 2 into account. Operation of the wind turbines 2 affects the operation of the other wind turbines 2 of the wind farm 1, in the sense that the operating conditions across the wind farm 1 change in response to the operation of the wind turbines 2. For instance, wake effects will be introduced by the wind turbines 2, which in particular affect the operating conditions applying to downstream wind turbines 2, but which may also affect wind turbines 2 arranged upstream.

Next a noise level at a predefined evaluation position is predicted, based on the noise propagation model, the wind turbine models and information regarding the current operating conditions. The predefined evaluation position may be a position within the wind farm 1, or it may be a position outside, but in the vicinity of, the wind farm 1.

In the case that the predicted noise level exceeds a predefined threshold noise value, it will be required to reduce the noise level at the predefined evaluation position. This is done by the reducing the noise generated by one or more of the noise generators, i.e. by one or more of the wind turbines 2. To this end, one or more wind turbines 2 must be selected in an appropriate manner, and it must be determined how to change the operation of the selected one or more wind turbines 2 in order to obtain the desired reduction in the noise level at the predefined evaluation position.

This is done by performing an optimisation process, using the noise propagation model and the wind turbine models. The optimisation process has the predefined threshold noise value as a constraint, the noise generation and the power production of the wind turbines 2 as optimisation variables, and the total power production of the wind farm 1 as an optimisation target.

Accordingly, the one or more wind turbines 2, as well as the manner in which their operation should be changed, are selected in such a manner that it is ensured that the noise level at the predefined evaluation position remains below the predefined threshold noise value, while the total power production of the wind farm is maximised, i.e. the total penalty, in terms of reduction in total power production, for obtaining the desired reduction in noise level, is minimised.

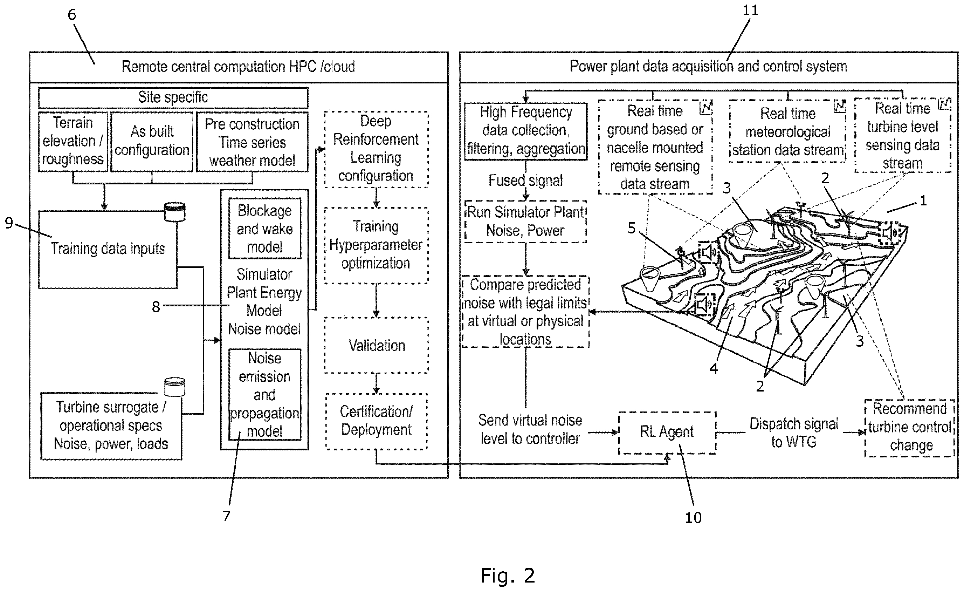

Fig. 2 is a diagram illustrating a method for controlling noise generated by a wind farm 1 according to an embodiment of the invention. At a remote computation facility 6, a noise propagation model 7 and wind turbine models 8 are trained in the following manner. Site specific data related to the wind farm 1, in the form of terrain, elevation and roughness data, configuration of the wind farm 1 and of the wind turbines 2 of the wind farm 1, and a weather model are applied as training data input 9, along with operational specifications of the wind turbines 2, such as noise specifications, power curves, load specifications, etc. Furthermore, a blockage and wake model related to the site of the wind farm 1 is provided.

The noise propagation model 7 and the wind turbine models 8 are then trained, based on the provided training input data 9, and by means of a deep reinforcement learning configuration. The models 7, 8 are validated and certified, and are then supplied to a Reinforcement Learning (RL) agent 10 forming part of a control system 11 of the wind farm 1.

Real time data regarding operation of the wind turbines 2 and meteorological conditions is collected and supplied to the trained models 7, 8. A noise level at a predefined evaluation position is then predicted, using the trained models 7, 8, and based on the collected data. The predicted noise level is compared to a predefined threshold noise value, and in the case that the predicted noise level exceeds the predefined threshold noise value, the RL agent 10 initiates an optimisation process.

In the optimisation process, the RL agent 10 applies the trained models 7, 8 in order to select one or more wind turbines 2 and change the operation of the one or more selected wind turbines 2 in such a manner that the noise level at the predefined evaluation position is reduced to a level below the predefined threshold noise value, while the total power production of the wind farm 1 is optimised.

The RL agent 10 then dispatches control signals to the wind turbines 2 in order to cause the selected wind turbines 2 to change their operation in the specified manner, thereby causing the desired reduction in noise level at the predefined evaluation position.

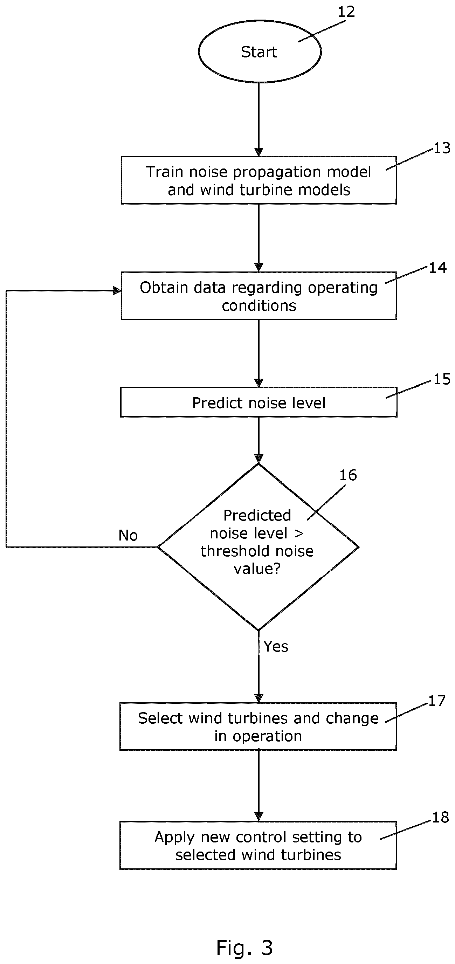

Fig. 3 is a flow chart illustrating a method for controlling noise generated by a wind farm according to an embodiment of the invention.

The process is started at step 12. At step 13 a noise propagation model related to the wind farm and wind turbine models for the wind turbines of the wind farm are trained, e.g. by means of artificial intelligence (AI), such as reinforced learning. The noise propagation model includes the wind turbines of the wind farm as noise generators, and it takes interactions among the wind turbines into account.

At step 14, data regarding operating conditions prevailing at the wind farm is obtained, during operation of the wind farm. The data may include data related to the wind turbines, such as power production and/or local meteorological conditions, e.g. measured by appropriate sensors arranged in or near the wind turbines. Furthermore, the data may include meteorological data related to the wind farm, such as wind speed, wind direction, turbulence conditions, precipitation, air density, temperature, etc.

At step 15, a noise level at a predefined evaluation position is predicted. The predefined evaluation position may be a position within the wind farm, or it may be position outside, but in the vicinity of, the wind farm. The noise level is predicted based on the noise propagation model and the wind turbine models, and based on the obtained data regarding operating conditions prevailing at the wind farm. Thus, the noise level is predicted based on knowledge regarding how the wind turbines generate noise under the prevailing operating conditions, how the operation of the wind turbines affect each other under the prevailing operating conditions, and how the noise generated by the wind turbines propagates across the wind farm and in the vicinity of the wind farm under the prevailing operating conditions.

At step 16, the predicted noise level at the predefined evaluation position is compared to a predefined threshold noise value. In the case that the predicted noise level is below the predefined threshold noise value, it can be assumed that the noise generated by the wind farm fulfils noise requirements at the predefined evaluation position. Therefore, when this is the case, the wind turbines of the wind farm are all allowed to continue operating without additional noise constraints. Accordingly, the process is returned to step 14 for continued collection of data regarding the prevailing operating conditions.

In the case that step 16 reveals that the predicted noise level at the predefined evaluation position exceeds the predefined threshold noise value, this may be an indication that there is a risk that noise requirements at the predefined evaluation position may not be fulfilled. In this case it will therefore be required to reduce the noise generated by the wind turbines of the wind farm in order to reduce the noise level at the predefined evaluation position to a level below the predefined threshold noise value.

Accordingly, when this is the case, the process is forwarded to step 17, where one or more wind turbines are selected, and a change in operation of each of the selected wind turbines is also selected. This is done by means of the noise propagation model and the wind turbine models, and by performing an optimisation process. The optimisation process has the predefined threshold noise value at the predefined evaluation position as a constraint, the noise generation and the power production of the wind turbines as optimisation variables, and the total power production of the wind farm as an optimisation target. Thus, the optimisation process adjusts the noise generation and the power production of the wind turbines, in order to reduce the noise level at the predefined evaluation position to a level below the predefined threshold noise value, while maximising the total power production. Accordingly, the desired reduction in noise level is obtained with minimal penalty, in terms of reduced power production.

At step 18, new control settings are applied to the selected wind turbines, in order to change the operation of the selected wind turbines in accordance with the selected changes in operation. Thereby the desired reduction in noise level is actually obtained.

## Claims

1. A method for controlling noise generated by a wind farm (1), the wind farm (1) comprising a plurality of wind turbines (2) arranged at a wind farm site, the method comprising the steps of:
- providing a noise propagation model (7) related to noise propagation across the wind farm (1) and in the vicinity of the wind farm (1), under various operating conditions, the noise propagation model (7) including the wind turbines (2) of the wind farm (1) as noise generators, and the noise propagation model (7) taking interactions among the wind turbines (2) into account,
- for each wind turbine (2) of the wind farm (1), providing a wind turbine model (8), the wind turbine model (8) relating to at least power production and noise generation of the wind turbine (2) under various operating conditions,
- predicting a noise level at a predefined evaluation position, based on the noise propagation model (7), the wind turbine models (8) and information regarding the current operating conditions,
- in the case that the predicted noise level exceeds a predefined threshold noise value, selecting one or more wind turbines (2) among the wind turbines (2) of the wind farm (1), and changing operation of the one or more selected wind turbines (2),
wherein the steps of selecting one or more wind turbines (2) and changing operation of the one or more selected wind turbines (2) are performed using the noise propagation model (7) and the wind turbine models (8), and by performing an optimisation process with the predefined threshold noise value at the predefined evaluation position as a constraint, the noise generation and the power production of the wind turbines (2) as optimisation variables, and the total power production of the wind farm (1) as an optimisation target, thereby reducing the predicted noise level at the predefined evaluation position to a level below the predefined threshold noise value while maximising the total power production of the wind farm (1).

2. A method according to claim 1, further comprising the step of providing a site specific wind flow field across the wind farm site, based on the current operating conditions, and wherein the steps of predicting a noise level, selecting one or more wind turbines (2) and changing operation of the one or more selected wind turbines (2) is further performed based on the site specific wind flow field.

3. A method according to claim 2, wherein the site specific wind flow field is based at least partly on a high resolution weather model.

4. A method according to claim 2 or 3, wherein the site specific wind flow field is based at least partly on expected turbulence patterns at the wind farm site.

5. A method according to any of claims 2-4, wherein the step of providing a site specific wind flow field is based at least partly on a wind flow model related to the wind farm site, and wherein the noise propagation model (7) is at least partly based on the wind flow model.

6. A method according to any of the preceding claims, wherein the step of providing a noise propagation model (7) and/or the step of providing wind turbine models (8) comprises training an artificial intelligence (AI) model.

7. A method according to claim 6, wherein the step of training the artificial intelligence (AI) model comprises applying reinforced learning.

8. A method according to any of the preceding claims, wherein the step of changing operation of the one or more selected wind turbines (2) comprises selecting one or more control parameter settings and adjusting the selected control parameter settings in a selected manner.

9. A method according to any of the preceding claims, wherein the noise propagation model (7) further relates to frequency components of the generated noise.

10. A method according to any of the preceding claims, further comprising the step of updating the noise propagation model (7) and/or the wind turbine models (8) during operation of the wind farm (1).

11. A method according to any of the preceding claims, wherein the noise propagation model (7) is at least partly based on the wind turbine models (8).
